# EUROPÄISCHE PATENTSCHRIFT

(11) **EP 0 603 242 B1**
(45) Veröffentlichungstag und Bekanntmachung des Hinweises auf die Patenterteilung: **11.10.1995**
(21) Anmeldenummer: 92918941.3
(22) Anmeldetag: 09.09.1992
(51) Int. Cl.: A47J 31/44, A47J 31/06, A47J 31/46

(54) **BRÜHGETRÄNKEMASCHINE**
BEVERAGE BREWING MACHINE
MACHINE POUR PREPARATION D'UNE BOISSON

(30) Priorität: 13.09.1991 DE 4130446
(43) Veröffentlichungstag der Anmeldung: 29.06.1994
(73) Patentinhaber: Braun Aktiengesellschaft, Frankfurt am Main (DE)
(72) Erfinder: WELLER, Albrecht, Dr., D-61449 Steinbach (DE); DRIESEN, Georges, Dr., D-61276 Weilrod (DE); PETER, Andreas, D-61476 Kronberg (DE); HERBER, Peter, D-60318 Frankfurt am Main (DE); SCHÄFER, Gerhard, D-60437 Frankfurt am Main (DE); SCHAMBERG, Stefan, D-61250 Usingen (DE)
(86) Internationale Anmeldenummer: EP9202081
(87) Internationale Veröffentlichungsnummer: WO9305692

(56) Entgegenhaltungen:
- DE-A- 2 821 996
- DE-C- 711 684
- US-A- 4 064 795

## Beschreibung

Die Erfindung betrifft eine Brühgetränkemaschine, in der kaltes Wasser von einer elektrischen Heizeinrichtung erhitzt werden kann und als Brühwasser auf die obere Fläche einer Zutat, vorzugsweise Kaffeemehl oder Teeblätter, fließt, die in einem Filtereinsatz enthalten ist, der für das Brühgetränk durchlässig ist und seinerseits in den Aufnahmeraum einer Aufbrüheinheit eingesetzt ist, aus der nach Extrahierung der Zutat, das so hergestellte Brühgetränk schließlich in einen Auffangbehälter abfließt, wobei Brühwasser auch über einen anderen Weg als über die obere Fläche der Zutat in den Auffangbehälter gelangen kann.

Eine derartige Brühgetränkemaschine ist bereits aus der US-4,064,795 bekannt. Bei dieser Brühgetränkemaschine fließt Brühwasser über den anderen Weg direkt in den Auffangbehälter, ohne mit der Zutat in Kontakt zu gelangen. Durch die Verringerung der Kontaktzeit des Brühwassers mit der Zutat sollen unerwünschte Kaffeeanteile im wesentlichen nicht aus der Zutat extrahiert werden, so daß das in dem Auffangbehälter abfließenede Brühgetränk unerwünschte Anteile, wie Bitterstoffe, nur in geringem Maße enthält.

Bei dieser Brühgetränkemaschine wird beim Einfließen des Brühwassers in die obere Fläche der Zutat in der Regel diese derart aufgeschwemmt, daß das Kaffeemehl bereits zu Anfang des Brühvorganges am Rand des Filtereinsatzes hochsteigt. Bei weiterem Einfließen von Brühwasser auf die Zutat wird dann dieser obere Randbereich von dem Brühwasser kaum mehr erfaßt. Dieser Effekt wird dadurch verstärkt, daß das Brühwasser im allgemeinen aus einer relativ zentral angeordneten Austrittsöffnung auf die obere Fläche der Zutat trifft und daß demzufolge unter Wirkung der Schwerkraft die Strömungsdichte des Brühwassers in den Randbereichen ohnehin deutlich niedriger liegt als im Mittenbereich der Zutat. Beide Effekte führen dazu, daß zwar die Extrahierung von Bitterstoffen weitgehend vermieden werden kann, daß aber die Ausnutzung der Zutat nach wie vor zu gering ist.

Aufgabe der Erfindung ist es daher, eine gattungsgemäße Brühgetränkemaschine zu schaffen, mit der eine bessere Ausnutzung der Zutat beim Brühvorgang erreicht wird, ohne daß der Bitterstoffanteil im Brühgetränk nennenswert zunimmt.

Diese Aufgabe wird erfindungsgemäß dadurch gelöst, daß der Filtereinsatz auch von außen nach innen wasserdurchlässig ist, daß der auf dem anderen Weg fließende Brühwasseranteil im Bereich der oberen Fläche der Zutat auf die Außenseite des Filtereinsatzes gelenkt wird und danach unter Extraktion der Zutat schließlich auch in den Auffangbehälter gelangt. Durch diese erfindungsgemäße Anordnung wird nun auch der obere Bereich der Zutat von dem auf anderem Wege fließenden Brühwasseranteil von außen her durchdrungen und dabei zusätzlich noch extrahiert. Da aufgrund der Aufteilung des Brühwassers, das über zwei verschiedene Wege in die Aufbrüheinheit gelangt, nach wie vor die Kontaktzeit des Brühwassers mit der Zutat geringer ist, werden auch durch den auf anderem Wege durch die Zutat fließenden Brühwasseranteil keine nennenswerten unerwünschten Geschmacksstoffe aus der Zutat extrahiert. Ohne also unerwünschte Bitterstoffe im Brühgetränk zu erhalten, wird durch den auf anderem Wege fließenden Brühwasseranteil zusätzlich noch die Zutat besser extrahiert, so daß das dabei entstehende Brühgetränk nahezu dieselben Konzentratanteile enthält, wie wenn das gesamte Brühwasser über die Oberfläche der Zutat geflossen wäre.

In Versuchen hat sich gezeigt, daß, wenn das gesamte Brühwasser (8 Tassen) über die obere Fläche der von Kaffeemehl gebildeten Zutat (ca. 52 Gramm) eingeleitet wird (herkömmliche Brühweise), etwa 1,35 Gewichtsprozente Konzentrat bei hohen Bitterstoffanteilen entstehen. Wird das Brühwasser entsprechend dem in der US-4,064,795 beschriebenen Verfahren hergestellt, so ergeben sich bei einem Bypassanteil von ca. 25 % nur etwa 1,15 Gewichtsprozente Konzentrat im Brühgetränk, allerdings mit geringen Bitterstoffanteilen. Wird das Brühgetränk gemäß den Merkmalen der Erfindung hergestellt, so ergeben sich im Brühgetränk etwa 1,33 Gewichtsprozente Konzentrat, das heißt, es fehlen gegenüber der ersten Variante nur 0,02 Gewichtsprozente Konzentrat. Dieser geringe Gewichtsanteil ist aber genau der Anteil, der die Bitterstoffe und sonstige unerwünschte Begleitstoffe ausmacht, das heißt, das nach der Erfindung hergestellte Brühgetränk ist genau so stark wie bei der herkömmlichen Brühweise, es weist aber dennoch den geringen Bitterstoffanteil auf, der sich bei der Herstellung des Brühgetränks gemäß dem Verfahren nach der US-4,064,795 etwa ergibt.

Damit das auf anderem Wege in die Aufbrüheinheit fließende Brühwasser mit der Zutat im oberen Bereich der Filtereinheit möglichst gleichmäßig in Kontakt gebracht werden kann, ist es vorteilhaft, daß als Filtereinsatz ein Papierfilter verwendet wird, daß der Aufnahmeraum der Aufbrüheinheit eine topfförmige Gestalt und im Bereich seines Randes ein in den Aufnahmeraum der Aufbrüheinheit hineinragendes Abstandselement aufweist, wobei die Abmessungen des Aufnahmeraums der Aufbrüheinheit so auf den Papierfilter abgestimmt sind, daß dieser beim Aufbrühvorgang mit Ausnahme im Bereich des Abstandselementes im wesentlichen an der Innenwand der Aufbrüheinheit anliegt, daß aber im Bereich des Abstandselementes ein Raum zwischen der Innenwand der Aufbrüheinheit und der Außenseite des Papierfilters entsteht und daß das auf anderem Wege geführte Brühwasser über den Raum in die Aufbrüheinheit eintritt. Dadurch, daß also ein wasserdurchlässiger Papierfilter verwendet wird und dieser mit Ausnahme im Bereich des Abstandselementes, von wo das auf anderem Wege einfließende Brühwasser eingeleitet wird, zumindest im oberen Bereich an der Innenseite der Aufbrüheinheit anliegt, kann das auf anderem Wege eingeleitete Brühwasser sich gleichmäßig um den ganzen Papierfilter herum verteilen und somit von außen in die Zutat eindringen, um auch in dieser äußeren Zone eine bessere Extraktion des Kaffeemehls zu erreichen, d.h., für das Getränk wichtige Brühgetränkebestandteile zu extrahieren. Die gleichmäßige Verteilung des auf dem anderen Wege eingeleiteten Brühwasseranteils auf den oberen Bereich des Papierfilters setzt erst dann richtig ein, wenn der Papierfilter gleichmäßig befeuchtet ist und eng an der Innenseite der Filtereinheit anliegt. Denn dann tritt dieser Verteilungsvorgang aufgrund einsetzender Osmose und Kapillarwirkung merklich ein. Je besser also der Papierfilter mit seiner Außenseite an der Innenseite der Filtereinheit anliegt, desto gleichmäßiger tritt das Brühwasser über den Papierfilter in die Zutat von außen ein.

Ein besonders wirkungsvolles Durchdringen des auf anderem Wege in die Aufbrüheinheit einströmenden Brühwassers durch den Papierfilter wird dann erreicht, wenn sowohl der Aufnahmeraum der Aufbrüheinheit und der Papierfilter trichterförmig ausgebildet sind.

Besonders vorteilhaft ist es, wenn das Abstandselement eine derartige Gestalt aufweist, daß es zusammen mit der Innenwand der Filtereinheit einen zur Einlaßöffnung sich erweiternden Trichter für das Brühwasser bildet und wenn der Trichter eine das Brühwasser auf die Außenseite des Filtereinsatzes lenkende Öffnung aufweist. Hierdurch wird das über die obere Öffnung des Trichters einfließende Brühwasser der Auslaßöffnung zugeführt, von der es dann über die Außenseite nach innen in den Papierfilter eingeleitet wird. Durch diese Anordnung wird erreicht, daß das auf anderem Wege einfließende Brühwasser vorzugsweise nur im oberen Bereich auf die Außenseite des Papierfilters eingeleitet wird, so daß das Brühwasser mit dem oberen Randbereich der Zutat in Kontakt gelangt.

Um das auf dem anderen Weg in die Aufbrüheinheit einfließende Brühwasser in dem oberen Bereich des Papierfilters einleiten zu können, ist es vorteilhaft, daß die Öffnung am Trichter von einem entlang der Mantelfläche des Trichters verlaufenden Schlitz gebildet wird.

Weiterhin ist es denkbar, daß das Abstandselement aus einem an seinen beiden Enden an der Innenwand der Aufbrüheinheit befestigten Band besteht, das mit der Innenwand der Aufbrüheinheit eine Öffnung für das Brühwasser bildet. Bei dieser Ausführungsform kann beispielsweise das Abstandselement aus Blech hergestellt und an der Innenwand der Aufbrüheinheit befestigt sein. Es besteht aber auch die Möglichkeit, daß das Abstandselement, ebenso wie die Aufbrüheinheit, aus Kunststoff hergestellt ist, so daß beide Teile ein einteiliges Formteil bilden.

Damit lediglich der obere Bereich des Papierfilters besonders gleichmäßig und umlaufend an der Innenseite der Aufbrüheinheit anliegt, ist es vorteilhaft, daß auf der Innenwand längs der Aufbrüheinheit von oben nach unten verlaufende Rippen ausgebildet sind, deren Profilhöhen vom unteren Bereich der Auslaßöffnung zum oberen Rand der Innenwand der Aufbrüheinheit derart abnehmen, daß der obere Bereich der Innenwand glatt ausgebildet ist. Die Rippen im unteren Bereich der Aufbrüheinheit dienen insbesondere dazu, daß ein zu großer Ansaugeffekt des Papierfilters an der Innenseite der Aufbrüheinheit nicht auftritt und somit der Papierfilter mit der Zutat nach dem Aufbrühvorgang noch verhätnismäßig leicht der Filtereinheit entnommen werden kann, ohne daß der Papierfilter dabei zerreißt. Im oberen Bereich soll hingegen der Papierfilter nahezu schlüssig an der Innenwand anliegen, um so ein gleichmäßiges Übertreten des von außen eindringenden Brühwassers auf den Papierfilter zu ermöglichen.

Zwei Ausführungsbeispiele der Erfindung sind in der Zeichnung dargestellt und werden im folgenden näher beschrieben.

Es zeigen:
- Fig. 1: Längsschnitt durch ein erstes Ausführungsbeispiel nach der Erfindung, wobei der andere Weg für das Brühwasser von einer Leitung mit siphonarrigem Verlauf gebildet wird und wobei nur der Vorratsbehälter mit darunter angeordnetem Kaffeefilter einer Brühgetränkemaschine dargestellt ist und
- Fig. 2: Längsschnitt durch ein zweites Ausführungsbeispiel der Erfindung, wobei nur der den anderen Weg enthaltende Brühkopf und die Aufbrüheinheit einer Brühgetränkemaschine schematisch dargestellt sind.
- Fig. 3: Längsschnitt gemäß der Schnittführung III-III nach Fig. 4 durch ein anderes Ausführungsbeispiel einer Filtereinheit nach der Erfindung, allerdings ohne Filtereinsatz und
- Fig. 4: Teildraufsicht auf die in Fig. 3 dargestellte Filtereinheit von oben her gesehen.

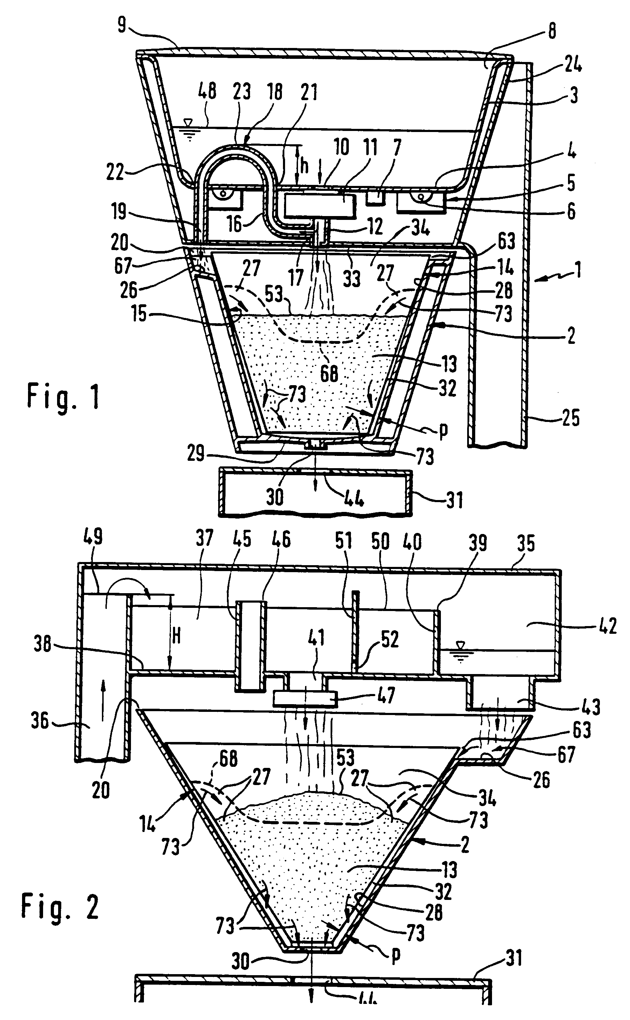

In Fig. 1 ist ein Ausschnitt einer Brühgetränkemaschine 1 dargestellt, die oberhalb einer Aufbrüheinheit 2 einen Vorratsbehälter 3 aufweist, an dessen Boden 4 eine elektrisch betriebene Heizeinrichtung 5 angeordnet ist. Der Vorratsbehälter 3 stellt somit mit der Heizeinrichtung 5 einen offenen Kessel dar, in dem eingefülltes Wasser zum Kochen gebracht werden kann. Die Heizeinrichtung 5 wird von einer kreisförmig verlaufenden Heizspirale 6 gebildet, die bei Einschalten eines in der Zeichnung nicht dargestellten Schalters der Brühgetränkemaschine mit elektrischer Energie versorgt wird.

Am Boden 4 außerhalb des Vorratsbehälters 3 ist nach Fig. 1 weiterhin eine die Temperatur des Wassers des Vorratsbehälters 3 kontrollierende Temperatursteuereinrichtung 7 angeordnet, die, wenn das Wasser auf ausreichenge Temperatur erhitzt ist, die elektrische Energieversorgung zur Heizspirale 6 unterbricht. Der Vorratsbehälter 3 weist eine Einfüllöffnung 8 auf, die von einem Deckel 9 verschließbar ist.

Am Boden 4 des Vorratsbehälters 3 ist nach Fig. 1 weiterhin eine Öffnung 10 ausgebildet, die mit einem unterhalb des Bodens 4 angeordneten Auslaßventil 11 verbunden ist. Das Auslaßventil 11 wird von einem Thermostatventil gebildet, das erst dann öffnet, wenn das Wasser bei seiner Erhitzung eine vorgegebene Temperatur, vorzugsweise seine Siedetemperatur, erreicht hat. An das Auslaßventil 11 schließt sich ein Auslaßrohr 12 an, das, sobald das Auslaßventil 11 seine Offenstellung eingenommen hat, das Brühwasser auf die obere Fläche 53 einer in der Aufbrüheinheit 2 eingegebenen Zutat 13 abfließen läßt. Die Zutat 13 besteht vorzugsweise aus Kaffeemehl, das erst dann in die Aufbrüheinheit 2 eingegeben wird, wenn ein wasserdurchlässiger Filtereinsatz 14, vorzugsweise ein Papierfilter, in den nach unten konisch sich verjüngenden Aufnahmeraum 15 der Aufbrüheinheit 2 eingebracht wurde.

An dem Auslaßrohr 12 zweigt nach Fig. 1 eine Leitung 16 ab, die einen siphonartigen Verlauf 18 aufweist, das heißt, die Leitung 16 erstreckt sich von ihrer unterhalb des Bodens 10 ausgebildeten Abzweigstelle 17 nochmals in den Raum des Vorratsbehälters 3 hinein, von wo sie dann aufgrund ihres siphonartigen Verlaufs 18 wieder zum Boden 4 zurückkehrt, diesen durchbricht und mit ihrem freien Ende 19 auf den oberen Rand 20 der Aufbrüheinheit 2 gerichtet ist. An den Stellen, wo die Leitung 16 den Boden 4 durchdringt, muß selbstverständlich die Leitung 16 gegenüber den am Boden 4 ausgebildeten Öffnungen 21, 22 dicht abgeschlossen sein.

Der Scheitelpunkt 23 der siphonartigen Leitung 16 befindet sich nach Fig. 1 in einer Höhe h, die etwa einer im Vorratsbehälter 3 vorhandenen Wassermenge von 20 % bis 40 % der vom Vorratsbehälter 3 maximal aufnehmbaren Kapazität an Wasser entspricht. Bei Verwendung einer flexiblen Leitung 16 und einer in Fig. 1 nicht dargestellten Höhenverstelleinrichtung kann der Scheitelpunkt 23 vom Benutzer auf verschiedene Höhen h eingestellt werden, sofern die Leitung 16 ausreichend lang bemessen ist.

Nach Fig. 1 ist der Vorratsbehälter 3 in einer Umkleidung bzw. einem Gehäuse 24 eingebettet, das mit einem Standfuß 25 verbunden ist. Selbstverständlich ist es auch denkbar, daß die siphonartige Leitung 16 auch außerhalb des Vorratsbehälters 3 in gleicher Weise verläuft. Das freie Ende 19 der siphonartigen Leitung 16 kann, wenn dies erforderlich ist, mit einer den Durchfluß des Wassers steuernden Ventileinrichtung versehen sein, die aber in der Zeichnung nicht dargestellt ist.

Senkrecht unterhalb des freien Endes 19 ist gemäß den Fign. 1 bis 4 am Rand 20 der Aufbrüheinheit 2 eine Auffangrinne 26 ausgebildet, die das am freien Ende 19 austretende Brühwasser auffängt und auf die Außenseite 63 des Filtereinsatzes 14 (nur in Fig. 1 und 2 dargestellt) leitet, von wo es über den wasserdurchlässigen Filtereinsatz 14 in den äußeren oberen Randbereich 27 der Zutat 13 (nur in Fig. 1 und 2 dargestellt) eindringt und nach Extraktion, etwa gemäß der dargestellten Pfeile 73, wieder über den Filtereinsatz 14 zum Boden 29 der Aufbrüheinheit 2 geleitet wird, an der es dann gemeinsam mit dem an der oberen Fläche 53 der Zutat 13 eingetretenen Brühwasser an der Auslaßöffnung 30 ausströmt, von wo es in einen unterhalb der Auslaßöffnung 30 ausgebildeten Auffangbehälter 31 einfließt.

Die Auffangrinne 26 kann als örtlich ausgebildete Vertiefung im Rand 20 der Aufbrüheinheit 2 ausgebildet sein, wie dies in den Fign. 1 und 2 dargestellt ist; sie kann aber auch als teilweise oder ganz in dessen inneren Umfang der Filtereinheit 2 integrierte, ringförmig verlaufende Rinne ausgebildet sein, die zusätzlich noch, vom Einlauf ausgehend, ein Gefälle in Richtung der Auslaßöffnung 30 aufweisen kann. Die Aufbrüheinheit 2 kann an der Unterseite 33 des Gehäuses bzw. der Umkleidung 24 herausnehmbar befestigt sein.

Wie aus Fig. 1 zu erkennen ist, steht in diesem Ausführungsbeispiel das obere freie Ende des Papierfilters 14 über die Auffangrinne 26 hinaus, damit, wenn Brühwasser über die Leitung 16 fließt, dieses nicht in das Innere 34 des Papierfilters 14 gelangt. Allerdings darf der Papierfilter 14 nicht soweit nach oben hervorstehen, daß auf die Auffangrinne 26 fließendes Wasser den Papierfilter 14 nach innen zusammenfallen läßt.

Was die Aufbrüheinheiten 2 in den Fign. 2 bis 4 betrifft, so entsprechen diese im wesentlichen der in Fig. 1, so daß diesbezüglich in den Fign. 2 bis 4 auf diese nicht näher eingegangen wird. Zur Vermeidung von Wiederholungen wurden deshalb bei der Aufbrüheinheit 2 in den Fign. 2 bis 4 für gleiche Teile gleiche Positionszeichen verwendet.

In Fig. 2 ist ein Brühkopf 35 dargestellt, der oberhalb der Aufbrüheinheit 2 ausgebildet ist. Der Brühkopf 35 weist ein Steigrohr 36 auf, das mit einem in der Zeichnung nicht dargestellten Durchlauferhitzer verbunden ist. Der Durchlauferhitzer ist wiederum über einen in der Zeichnung nicht dargestellten Vorratsbehälter verbunden, in dem sich beim Aufbrühvorgang kaltes Wasser befindet. Da eine nach diesem Prinzip arbeitende Kaffeemaschine bereits seit langem bekannt ist, wie dies auch aus der deutschen Patentanmeldung P 41 08 631.7 deutlich hervorgeht, wird auf die Erzeugung und den Transport von Brühwasser bis zum Brühkopf 35 hin hier nicht näher eingegangen. Das Brühwasser wird also dann letztendlich dem Steigrohr 36 am Brühkopf 35 zugeführt.

Nach Fig. 2 mündet das Steigrohr 36 in eine im Brühkopf 35 ausgebildete Hauptkammer 37, allerdings in einer Höhe H gegenüber dem Boden 38 der Hauptkammer 37, die oberhalb der Oberkante 39 einer Trennwand 40 liegt. Die Trennwand 40 grenzt die Hauptkammer 37 nach Fig. 2 nach rechts ab und liegt rechts von einer ersten Austrittsöffnung 41, die etwa oberhalb der Mitte der Aufbrüheinheit 2 ausgebildet ist, so daß, wenn Brühwasser aus der ersten Austrittsöffnung 41 auströmt, dieses direkt auf die obere Fläche 53 der sich darunter befindlichen Zutat 13 fließt.

Rechts von der Trennwand 40 ist nach Fig. 2 eine Nebenkammer 42 ausgebildet, die am Boden 38 des Brühkopfes 35 eine zweite Austrittsöffnung 43 aufweist, die dem freien Ende 19 der Leitung 16 in Fig. 1 entspricht. Nach Fig. 2 ist links von der ersten Austrittsöffnung 41 im Boden 38 ein Rohr 45 ausgebildet, das den Boden 38 nach unten zur Atmosphäre hin durchdringt und das in die Hauptkammer 37 soweit hineinragt, daß es mit seiner Oberkante 46 oberhalb der Trennwand 40 endet. Das Rohr 45 dient als Entlüftung für die Haupt- und Nebenkammer 37, 42. An die erste Austrittsöffnung 41 schließt sich noch ein Ventil 47 an, mit dem der Durchlaßquerschnitt der ersten Austrittsöffnung 41 vergrößert werden kann, wenn dies nicht bereits durch ein an der zweiten Austrittsöffnung 43 ausgebildete Ventil (nicht dargestellt) erfolgt.

Wie aus den Fign. 1 bis 4 hervorgeht, sind an der Innenwandung 28 der Aufbrüheinheit 2 hervorstehende Rippen 32 ausgebildet, die längs der Aufbrüheinheit 2 von unten nach oben verlaufen; dabei verjüngen sich die Rippen 32 zum oberen Rand 20 der Filtereinheit 2 sowohl in der Höhe p wie in der Breite b derart, daß sie dort vollständig oder nahezu ganz in die Innenwandung 28 einlaufen, d.h., die Innenwandung 28 ist im oberen Bereich glatt ausgebildet. Die Rippen 32 wirken bei Einsatz eines Papierfilters 14 als Abstandselemente und erleichtern u.a. das Herausnehmen des Papierfilters 14 nach dem Brühvorgang, da in diesem unteren Bereich der Papierfilter 14 nicht so fest haftend an der Innenseite 28 der Aufbrüheinheit 2 anliegt, wie dies im oberen Bereich der Fall ist. Bei Verwendung einer Mehrzahl von Abstandselementen 32 längs der Wandung 28 kann somit die Haftung des feuchten Papierfilters 14 an der Innenwand 28 der Filtereinheit 2 verringert werden.

Die Wirkungsweise der Brühgetränkemaschinen nach Fig. 1 bis 4 ist folgende:
Wird bei der Brühgetränkemaschine 1 nach Fig. 1 in den Vorratsbehälter 3 kaltes Wasser eingefüllt, deren Fülstand durch den Pegelstand angezeigt wird, so ist zu erkennen, daß der Pegelstand 48 oberhalb des Scheitelpunktes 23 der siphonartig verlaufenden Leitung 16 liegt. Sobald der Hauptschalter (nicht dargestellt) der Brühgetränkemaschine 1 eingeschaltet wird, startet die Heizeinrichtung 5, da die Temperatursteuereinrichtung 7 kurzgeschlossen ist. Nun heizt sich das Wasser im Vorratsbehälter 3 solange auf, bis es anfängt zu kochen, bzw. bis die gewünschte Temperatur erreicht ist. Ab diesem Punkt unterbricht die Temperatursteuereinrichtung 7 den Strom zu der Heizspirale 6. Gleichzeitig öffnet das Auslaßventil 11 und Brühwasser läuft über das Auslaßrohr 12 auf die obere Fläche 53 der Zutat 13 in die Aufbrüheinheit 2.

Liegt der Pegelstand 48 des Brühwassers oberhalb des Scheitelpunktes 23 der Leitung 16, wie dies in Fig. 1 der Fall ist, so fließt auch Brühwasser durch die Leitung 16 und über das freie Ende 19 in die Auffangrinne 26 der Aufbrüheinheit 2. Bei entsprechender Wahl der Querschnitte von Auslaßrohr 12 und Leitung 16 wird sichergestellt, daß am Eingang der Leitung 16 ein ausreichender Druck anliegt, um Brühwasser über die Leitung 16 fließen zu lassen. Der Scheitelpunkt 23 ist etwa so hoch gewählt, daß ein bis zum Scheitelpunkt gefüllter Vorratsbehälter einer Tassenzahl von etwa drei Tassen entspricht.

Die Abzweigstelle 17 der Leitung 16 kann auch direkt am Boden 4 des Vorratsbehälters 3 mit einen eigenen temperaturgesteuerten Ventil (nicht dargestellt) verbunden sein, so daß die Brühwasserabgabe nicht über das Ventil 11 sondern über einen eigenen Anschluß mit Ventil am Vorratsbehälter 3 gesteuert werden kann.

Die Brühwassermenge, die mit der oberen Fläche 53 der Zutat 13 in Berührung kommt, extrahiert, beispielsweise bei der Herstellung von Kaffee, die Extraktionsstoffe aus dem Kaffeemehl 13 und fließt dann als Kaffeegetränk aus der Auslaßöffnung 30 der Filtereinheit 2 und über den Einlaß 44 in den Auffangbehälter 31 hinein. Gleichzeitig fließt aber auch Brühwasser - wenn der Pegel stand 48 höher steht als der Scheitelpunkt 23 der Leitung 16 - über das freie Ende 19 der Leitung 16 in die Auffangrinne 26, von wo es nach den Fign. 1 bis 4 über den anderen Weg 73, nämlich über den oberen Bereich der Außenseite 63 des Papierfilters 14 (Fig. 1 und 2) in den oberen Randbereich 27 der Zutat 13 und von dort etwa gemäß der Richtung der Pfeile 73 bis zur Auslaßöffnung 30 gelangt. Dieser Brühwasserantell, der bei einem als Papierfilter ausgebildeten und wasserdurchlässigen Filtereinsatz 14 von der Außenfläche 63 mit dem oberen Randbereich 27 des Kaffeemehls 13 in Kontakt kommt, führt zu einer besseren Ausnutzung des oberen Randbereiches 27, so daß man mit weniger Kaffeemehl auskommen kann und dabei auch noch geringere Bitterstoffanteile im Kaffee erhält; denn es kommt dabei praktisch kaum zu einer Extraktion von unerwünschten Geschmacksstoffen, da die Kontaktzeiten zwischen dem Kaffeemehl 13 und dem Brühwasser durch den als Bypass wirkenden anderen Weg 73 (Pfeile) verringert wird. Durch den getrennten Abfluß des Brühwassers aus dem Vorratsbehälter 3 wird nämlich ein geringerer Anteil von Brühwasser über die obere Fläche 53 der Zutat 13 geleitet, als wenn die Leitung 16 nicht vorhanden wäre. Hierdurch wird die Zutat 13 während einer kürzeren Zeit mit Brühwasser beaufschlagt, so daß Bitterstoffe und sonstige das Brühgetränk nachteilig beeinträchtigende Zutaten nicht extrahiert werden. Aufgrund des geringen Brühwasserpegels in der Aufbrüheinheit am Ende des Brühvorganges wird die Leertropfzeit zusätzlich um ca. 30 bis 40 Sekunden reduziert. Zusätzlich werden die auch bei einem Papierfilter 14 sich im Papier ablagernden, bereits aus der Zutat 13 von der Mitte her gelösten Extraktionsstoffe herausgeschwemmt und dem Auffangbehälter 31 zugeführt, die sonst ungenutzt im Papierfilter 14 geblieben wären.

Im oberen Bereich der Filtereinheit 2 liegt nach den Fign. 1 und 2 der obere Bereich des Filtereinsatzes 14, wenn es sich dabei um einen der Größe des Filtereinsatzes 14 angepaßten Papierfilter - beispielsweise der handelsüblichen Größe 1 X 4 - handelt, im wesentlichen ganzflächig an, aber erst dann, wenn der Papierfilter 14 durch das erste Brühwasser angefeuchtet wurde; denn dann haftet der Papierfilter 14 aufgrund der eintretenden Adhäsionskräfte besonders gut an der Innenwandung 28 der Filtereinheit 2, so daß aufgrund der einsetzenden Kapillarwirkung das Brühwasser, das über den anderen Weg 73 (Pfeile) die Filtereinheit 2 passiert, verhältnismäßig gleichmäßig über den gesamten Umfang des oberen Bereiches des Papierfilters 14 verteilt wird. Die mit der Positionsnummer 73 bezeichneten Pfeile geben in den Fign. 1 und 2 etwa den Weg wieder, den das Brühwasser auf dem anderen Weg 73, ausgehend von der Austrittsöffnung 19 (Fig. 1) bzw. 43 (Fig. 2), infolge einsetzender Osmose und Kapillarwirkung zurücklegt.

Während die obere Fläche 53 der Zutat 13 nach den Fign. 1 und 2 den Verlauf darstellt, der sich nach dem Einfüllvorgang des Kaffeemehls 13 in etwa ergibt, soll die gestrichelt eingezeichnete Linie 68 in etwa die Oberfläche der Zutat 13 darstellen, die sich kurz vor dem Zulauf aus der Austrittsöffnung 19 bzw. 43 durch Aufschwemmung ergibt.

Je höher der Pegelstand 48 nach Fig. 1 ist, desto mehr Anteile des Brühwassers fließen über die Leitung 16 und den anderen Weg 73. Dieser Brühwasseranteil kann etwa 10 bis 40 % betragen, je nach dem, welcher Pegelstand 48 im Vorratsbehälter 3 vorhanden ist.

Ist der Pegelstand 48 nach Fig. 1 unterhalb des Scheitelpunkts 23, so fließt überhaupt kein Brühwasser über die Leitung 16, das heißt, das ganze Brühwasser muß die Zutat 13 über dessen obere Fläche 53 passieren. Da in diesem Fall aber die Extraktionszeit, das heißt, die Zeit, mit der die Zutat 13 mit Brühwasser in Kontakt steht, noch relativ gering ist, werden aus der Zutat 13 unerwünschte Stoffe kaum oder nur in geringem Maße extrahiert.

Wird in Fig. 2 der Hauptschalter der Brühgetränkemaschine 1 eingeschaltet, so wird in dem in Fig. 2 nicht dargestellten Durchlauferhitzer Wasser erhitzt und durch die dabei eintretende Dampfblasenwirkung an dem Steigrohr 36 nach oben gepumpt, bis Brühwasser über den Rand 49 des Steigrohres 36 in die Hauptkammer 37 einströmt. Wie allgemein bekannt, fördert ein Durchlauferhitzer entsprechend seiner Heizleistung und dem Querschnitt seines beheizten Rohres in mehr oder weniger schnellen Intervallen Brühwasser, so daß jeweils an der Oberkante 49 Brühwasser schlagartig übertritt. Ist kein Ventil 47 vorhanden, so strömt entsprechend dem an der ersten Austrittsöffnung 41 ausgebildeten Querschnitt eine entsprechende Brühwassermenge aus der ersten Austrittsöffnung 41 auf die obere Fläche 53 der darunter befindlichen Zutat 13.

Anstelle des in Fig. 2 nicht dargestellten Durchlauferhitzers könnte zur Erhitzung des Brühwassers auch der in Fig. 1 dargestellte Vorratsbehälter 3 samt Ventil 11 verwendet werden, aus dem das gesamte Brühwasser nach Öffnung des Ventils 11 der Hauptkammer 37 zugeführt werden könnte. In diesem Fall wären die Dimensionierungen der beiden Austrittsöffnungen 41, 43, die Größe von Haupt- und Nebenkammer 37, 42 auf die plötzlich einsetzende, dauernde Brühwasserzufuhr anzupassen.

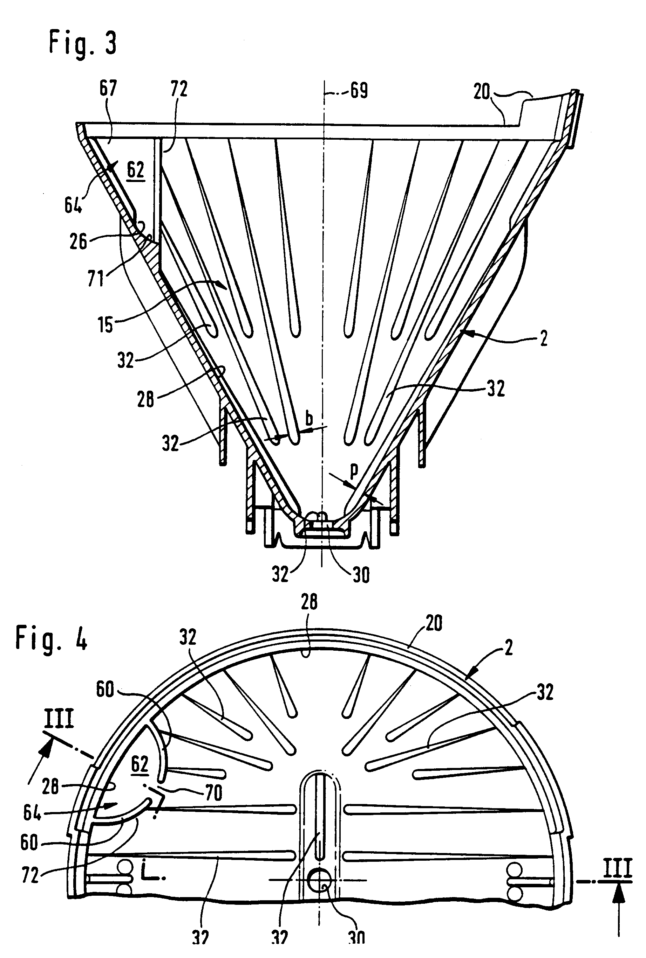

Der Querschnitt der ersten Austrittsöffnung 41 ist nach Fig. 2 so bemessen, daß weniger Brühwasser abfließt, als über das Steigrohr 36 zufließt. Demnach füllt sich die Hauptkammer 37 langsam mit Brühwasser, bis ein Brühwasserstand 50 erreicht wird, der der Oberkante 39 der Trennwand 40 entspricht. Danach läuft Brühwasser auch über die Oberkante 39 der Trennwand 40 in die Nebenkammer 42 ein, von wo es über die zweite Austrittsöffnung 43 in die Auffangrinne 26 der Aufbrüheinheit 2 gelangt und von dort dann über den anderen Weg 73 zur Auslaßöffnung 30 fließt, wo es mit dem Brühgetränk in den darunter aufgestellten Auffangbehälter 31 abfließt. Wie es durch das Einleiten des Brühwassers über die Auffangrinne 26 (Fign. 2 bis 4) auf die Außenseite 63 des Papierfilters 14 zu einer weiteren Extraktion des Kaffeemehls nach der Erfindung im oberen Bereich 27 kommen kann, wurde bereits vorstehend bei der Beschreibung der Fig. 1 erläutert, so daß an dieser Stelle auf eine nochmalige Beschreibung verzichtet werden kann. Die in den Fign. 3 und 4 dargestellte Filtereinheit 2 kann sowohl die in Fig. 1 wie die in Fig. 2 dargestellte Filtereinheit 2 ersetzen.

Aufgrund der starken Dampfbildung während der Förderung des Brühwassers durch das Steigrohr 36 könnte in dem geschlossenen Brühkopf 35, also in der Haupt- und Nebenkammer 37, 42, ein Überdruck entstehen, wenn nicht das Rohr 45 in der Hauptkammer 37 ausgebildet wäre, das erst oberhalb des Wasserstandes 50 endet, den Boden 38 durchdringt und dort mit der Atmosphäre verbunden ist. Hierdurch kann eine Druckerhöhung in der Haupt- und Nebenkammer 37, 42 nicht mehr auftreten, da Druckstöße über das Rohr 45 sofort zur Atmosphäre hin abgeleitet werden, wodurch ein gleichmäßiges Ausfließen von Brühwasser aus den Austrittsöffnung 41, 43 in Abhängigkeit des Wasserstandes erreicht wird.

Der Austritt von heißem Dampf am Rohr 35 nach Fig. 2 wird vorteilhaft noch dazu genutzt, die Zutat 13 und die Aufbrüheinheit 2 in gewissen Grenzen zu erwärmen, so daß Wärmeverluste beim Durchlauf des Brühwassers durch die Zutat 13 teilweise ausgeglichen werden und somit ausreichend heißer Kaffee in den Auffangbehälter 31 gelangt.

Wie aus Fig. 2 noch ersichtlich ist, erhebt sich vom Boden 38 eine Prallwand 51, die mit mindestens einem Durchlaß 52 versehen ist. Die Durchlässe 52 dienen dazu, daß sich jeweils links und rechts der Prallwand 51 in der Hauptkammer 37 ein gleichmäßig hoher Wasserstand 50 einstellt. Die Prallwand 51 selbst hat die Aufgabe, Brühwasser, das an der Oberkante 49 des Steigrohres 36 eingespritzt wird, abzufangen und zunächst in die Hauptkammer 37 einzuleiten, damit stets gewährleistet ist, daß Brühwasser nur dann in die Nebenkammer 42 einströmt, wenn der Brühwasserstand 50 tatsächlich auf der Höhe der Oberkante 39 der Trennwand 40 liegt.

## Patentansprüche

1. Brühgetränkemaschine (1), in der kaltes Wasser von einer elektrischen Heizeinrichtung (5) erhitzt werden kann und als Brühwasser auf die obere Fläche (53) einer Zutat (13), vorzugsweise Kaffeemehl oder Teeblätter, fließt, die in einem Filtereinsatz (14) enthalten ist, der für das Brühgetränk durchlässig ist und der seinerseits in den Aufnahmeraum (15) einer Aufbrüheinheit (2) eingesetzt ist, aus der nach Extrahierung der Zutat (13), das so hergestellte Brühgetränk schließlich in einen Auffangbehälter (31) abfließt, wobei Brühwasser auch über einen anderen Weg (73) als über die obere Fläche (53) der Zutat (13) in den Auffangbehälter (31) gelangen kann,
**dadurch gekennzeichnet,**
daß der Filtereinsatz (14) auch von außen nach innen wasserdurchlässig ist, daß der auf dem anderen Weg (73) fließende Brühwasseranteil im Bereich der oberen Fläche (53) der Zutat (13) auf die Außenseite (63) des Filtereinsatzes (14) gelenkt wird und danach unter Extraktion der Zutat (13) schließlich auch in den Auffangbehälter (31) gelangt.

2. Brühgetränkemaschine nach Anspruch 1,
**dadurch gekennzeichnet,**
daß als Filtereinsatz (14) ein Papierfilter verwendet wird, daß der Aufnahmeraum (15) der Aufbrüheinheit (2) eine topfförmige Gestalt und im Bereich seines Randes (20) ein in den Aufnahmeraum (15) der Aufbrüheinheit (2) hineinragendes Abstandselement (60) aufweist, wobei die Abmessungen des Aufnahmeraums (15) der Aufbrüheinheit (2) so auf den Papierfilter (14) abgestimmt sind, daß dieser (14) beim Aufbrühvorgang mit Ausnahme im Bereich des Abstandselementes (60) im wesentlichen an der Innenwand (28) der Aufbrüheinheit (2) anliegt, daß aber im Bereich des Abstandselementes (60) ein Raum (62) zwischen der Innenwand (28) der Aufbrüheinheit (2) und der Außenseite (63) des Papierfilters (14) entsteht, über den das auf anderem Wege (73) geführte Brühwasser in den Papierfilter (14) eintritt.

3. Brühgetränkemaschine nach Anspruch 2,
**dadurch gekennzeichnet,**
daß sowohl der Aufnahmeraum (15) der Aufbrüheinheit (2) und der Papierfilter (14) trichterförmig ausgebildet sind.

4. Brühgetränkemaschine nach Anspruch 2,
**dadurch gekennzeichnet,**
daß das Abstandselement (60) eine derartige Gestalt aufweist, daß es zusammen mit der Innenwand (28) der Filtereinheit (2) einen zur Einlaßöffnung (67) sich erweiternden Trichter (64) für das Brühwasser bildet und daß der Trichter (64) eine das Brühwasser auf die Außenseite (63) des Filtereinsatzes (14) gerichtete Öffnung (70) aufweist.

5. Brühgetränkemascine nach Anspruch 4,
**dadurch gekennzeichnet,**
daß die Innenwand (28) der Filtereinheit (2) im Bereich des Trichters (64) von einer Auffangrinne (26) gebildet wird, durch die das Brühwasser zur Öffnung (70) hin gelenkt wird.

6. Brühgetränkemaschine nach Anspruch 4,
**dadurch gekennzeichnet,**
daß die Öffnung (70) am Trichter (64) von einem entlang der Mantelfläche (72) des Trichters (64) verlaufenden Schlitz gebildet wird.

7. Brühgetränkemaschine nach Anspruch 2,
**dadurch gekennzeichnet,**
daß das Abstandselement (60) aus einem an seinen beiden Enden an der Innenwand (28) der Aufbrüheinheit (2) befestigten Band besteht, das mit der Innenwand (28) der Aufbrüheinheit (2) eine Öffnung (67) für das Brühwasser bildet.

8. Brühgetränkemaschine nach Anspruch 2,
**dadurch gekennzeichnet,**
daß auf der Innenwand (28) längs der Aufbrüheinheit (2) von oben nach unten verlaufende Rippen (32) ausgebildet sind, deren Profilhöhen (p) vom unteren Bereich der Auslaßöffnung (30) zum oberen Rand (20) der Innenwand (28) der Aufbrüheinheit (2) derart abnehmen, daß der obere Bereich der Innenwand (28) glatt ausgebildet ist.

9. Brühgetränkemaschine nach Anspruch 8,
**dadurch gekennzeichnet,**
daß die Profilhöhe (p) im Bereich der Auslaßöffnung (30) etwa 1 Millimeter beträgt und dann nach oben stetig abnimmt.

## Claims

1. A beverage brewing machine (1) in which cold water can be heated by an electric heating unit (5) and flows as brewing water on the upper surface (53) of a product (13), preferably ground coffee or tea leaves, contained in a filter insert (14) which is permeable for the brewed beverage and, in turn, is inserted into the receiving chamber (15) of a brewing unit (2), from which, after extraction of the product (13), the so prepared brewed beverage finally dispenses into a storing tank (31), while brewing water can propagate into the storing tank (31) also along another path (73) than along the upper surface (53) of the product (13),
characterized in that the filter insert (14) is water-permeable also from the outside to the inside, in that the portion of brewing water flowing along the other path (73) is directed in the area of the upper surface (53) of the product (13) to the outside surface (63) of the filter insert (14) and, subsequently, by extracting the product (13), finally reaches the storing tank (31).

2. A beverage brewing machine as claimed in claim 1,
characterized in that a paper filter is used as a filter insert (14), in that the receiving chamber (15) of the brewing unit (2) has a bowl-shaped configuration and comprises in the area of its edge (20) a spacer element (60) which projects into the receiving chamber (15) of the brewing unit (2), the dimensions of the receiving chamber (15) of the brewing unit (2) being conformed to the paper filter (14) so that, during the brewing action, the paper filter (14) substantially abuts on the inner wall (28) of the brewing unit (2), with the exception of the area of the spacer element (60), but that in the area of the spacer element (60) a space (62) is provided between the inner wall (28) of the brewing unit (2) and the outside surface (63) of the paper filter (14), through which the brewing water directed along the other path (73) enters into the paper filter (14).

3. A beverage brewing machine as claimed in claim 2,
characterized in that both the receiving chamber (15) of the brewing unit (2) and the paper filter (14) are of funnel-shaped configuration.

4. A beverage brewing machine as claimed in claim 2,
characterized in that the spacer element (60) has such a shape that it forms, jointly with the inner wall (28) of the filter unit (2), a funnel (64) for the brewing water which expands towards the inlet opening (67), and in that the funnel (64) contains an opening (70) directing the brewing water to the outside surface (63) of the filter insert (14).

5. A beverage brewing machine as claimed in claim 4,
characterized in that the inner wall (28) of the filter unit (2) is formed in the area of the funnel (64) by a collecting groove (26) through which the brewing water is directed to the opening (70).

6. A beverage brewing machine as claimed in claim 4,
characterized in that the opening (70) at the funnel (64) is formed by a slot which extends along the peripheral surface (72) of the funnel (64).

7. A beverage brewing machine as claimed in claim 2,
characterized in that the spacer element (60) is composed of a tape attached at its two ends to the inner wall (28) of the brewing unit (2) and forming an opening (67) for the brewing water together with the inner wall (28) of the brewing unit (2).

8. A beverage brewing machine as claimed in claim 2,
characterized in that ribs (32) extending from the top to the bottom are provided on the inner wall (28) along the brewing unit (2), the ribs' profile heights (p) decreasing from the bottom area of the outlet opening (30) towards the upper edge (20) of the inner wall (28) of the brewing unit (2) in such a manner that the upper area of the inner wall (28) is of a smooth design.

9. A beverage brewing machine as claimed in claim 8,
characterized in that the profile height (p) amounts to roughly 1 millimeter in the area of the outlet opening (30) and then reduces constantly in upward direction.

## Revendications

1. Machine (1) pour la préparation d'une boisson chaude, dans laquelle de l'eau froide peut être chauffée par un dispositif de chauffage (5) électrique et s'écoule à l'état d'eau bouillante sur la surface supérieure (53) d'un ingrédient (13), de préférence de la mouture de café ou des feuilles de thé, qui se trouve dans un élément filtrant (14) qui est perméable à la boisson et qui est mis en place de son côté dans la cavité réceptrice (15) d'un système d'ébouillantage (2), hors duquel, après extraction de l'ingrédient (13), la boisson chaude ainsi préparée s'écoule pour finir dans un récipient collecteur (31), l'eau bouillante pouvant aussi parvenir dans le récipient collecteur (31) par une autre voie (73) que par la surface supérieure (53) de l'ingrédient (13), caractérisée en ce que
l'élément filtrant (14) est aussi perméable à l'eau de l'extérieur vers l'intérieur, en ce que la part d'eau bouillante s'écoulant par l'autre voie (73) est guidée dans la région de la surface supérieure (53) de l'ingrédient (13) vers la face extérieure (63) de l'élément filtrant (14) et parvient ensuite aussi dans le récipient collecteur (31), après l'extraction de l'ingrédient (13).

2. Machine (1) pour la préparation d'une boisson chaude, selon la revendication 1, caractérisée en ce que l'élément filtrant (14) utilisé est un filtre en papier, en ce que la cavité de réception (15) du système d'ébouillantage (2) a une forme de pot et présente dans la région de son bord (20) un élément écarteur (60) faisant saillie dans la cavité de réception (15) du système d'ébouillantage (2), les dimensions de la cavité de réception (15) du système d'ébouillantage (2) étant adaptées au filtre (14) en papier de telle sorte que celui-ci repose lors de l'ébouillantage sensiblement sur la paroi intérieure (28) du système d'ébouillantage (2) sauf dans la région de l'élément écarteur (60), mais que dans la région de l'élément écarteur (60), il se forme un espace (62) entre la paroi intérieure (28) du système d'ébouillantage (2) et la face extérieure (63) du filtre (14) en papier et que l'eau bouillante menée par l'autre voie (73) pénètre par cet espace dans le filtre (14) en papier.

3. Machine (1) pour la préparation d'une boisson chaude, selon la revendication 2, caractérisée en ce que la cavité de réception (15) du système d'ébouillantage (2) aussi bien que le filtre (14) en papier sont réalisés en forme d'entonnoirs.

4. Machine (1) pour la préparation d'une boisson chaude, selon la revendication 2, caractérisée en ce que l'élément écarteur (60) présente une configuration telle qu'il forme avec la paroi intérieure (28) de l'unité de filtre (2) un entonnoir (64) pour l'eau bouillante, qui s'élargit vers l'ouverture d'admission (67) et que l'entonnoir (64) présente une ouverture (70) qui dirige l'eau bouillante sur la face extérieure (63) de l'élément filtrant (14).

5. Machine (1) pour la préparation d'une boisson chaude, selon la revendication 4, caractérisée en ce que la paroi intérieure (28) de l'unité de filtre (2) est formée dans la région de l'entonnoir (64) par une rigole collectrice (26) à travers laquelle l'eau bouillante est guidée vers l'ouverture (70).

6. Machine (1) pour la préparation d'une boisson chaude, selon la revendication 4, caractérisée en ce que l'ouverture (70) de l'entonnoir (64) est formée par une fente s'étendant le long de la surface enveloppe (72) de l'entonnoir (64).

7. Machine (1) pour la préparation d'une boisson chaude, selon la revendication 2, caractérisée en ce que l'élément écarteur (60) est constitué par un ruban fixé à ses deux extrémités sur la paroi intérieure (28) du système d'ébouillantage (2), formant avec la paroi intérieure (28) du système d'ébouillantage (2) une ouverture (67) pour l'eau bouillante.

8. Machine (1) pour la préparation d'une boisson chaude, selon la revendication 2, caractérisée en ce que des nervures (32) sont formées de haut en bas sur la paroi intérieure (28), le long du système d'ébouillantage (2), nervures dont les hauteurs de profit (p) diminuent depuis la région inférieure de l'ouverture d'admission (30) vers le bord supérieur (20) de la paroi intérieure (28) du système d'ébouillantage (2) de telle sorte que la région supérieure de la paroi intérieure (28) est lisse.

9. Machine (1) pour la préparation d'une boisson chaude, selon la revendication 8, caractérisée en ce que la hauteur de profil (p) dans la région de l'ouverture de sortie (30) est d'approximativement 1 mm et diminue ensuite de manière continue vers le haut.
